# EUROPEAN PATENT APPLICATION

(11) **EP 1 209 187 A1**
(43) Date of publication of application: **29.05.2002**
(21) Application number: 00125982.9
(22) Date of filing: 28.11.2000
(51) Int. Cl.: C08J 5/18, C08K 5/20

(54) **Use of propylene terpolymers for the production of films**

(71) Applicant: Borealis GmbH, 2323 Schwechat-Mannswörth (AT)
(72) Inventor: The designation of the inventor has not yet been filed
(74) Representative: VA TECH Patente GmbH & Co

(57) **Abstract**

The invention refers to the use of a polymer composition comprised of a propylene terpolymer which is comprised of 0.3 - 0.8 wt% of ethylene, 2.0 - 15.0 wt% of at least one C₄-C₈ α-olefin and 84.2 - 97.7 wt% of propylene for the production of films with an improved balance of mechanical and optical properties.

## Description

### Background of the Invention

### Field of the Invention

The present invention relates to the use of propylene terpolymers for the production of films. In particular, the present invention relates to the use of propylene terpolymers comprising propylene, a higher C₄-C₈ α-olefine and a small fraction of ethylene as third component.

Films produced from this polymer have excellent mechanical properties (balanced stiffness/tenacity ratio), optical properties and low blooming behaviour as well as an extraordinary fast slip agent migration and low COF (Coefficient of Friction) values.

### Description of Related Art

Polyolefin polymers have gained wide acceptance and usage in numerous commercial applications because of their relatively low costs and desirable properties.

Such commercial applications include plastic films such as cast films, blown films, mono- and biaxially oriented films and coating. These plastic films can for example be used for various flexible and rigid packaging, e.g. for food, medicals, textiles, flowers, stationery etc.

In addition it is important for films to exhibit good processability and good conversionability in terms of tensile properties, stiffness and frictional behaviour. Satisfactory frictional behaviour is also important for comfortable usage of films, e.g. for films used in office organization applications, especially for very thin cast films with thicknesses below 50 µm.

Frictional behaviour is usually measured as dynamic COF according to DIN 53 375. In order for good conversionability properties and comfortable use of the films it is necessary to use polymers containing a slip agent. The achievable COF depends on a variety of parameters, e.g. type and concentration of slip agent and the migration velocity of the slip agent. For known polymers the migration of slip agent is relatively slow and the best achievable Coefficient of Friction is too high for some applications.

In the early 80's the first propylene ethylene random copolymers were developed for cast film applications. The main reason for introducing of such a development was that films produced from these materials showed distinctly better optical properties, excellent sealing properties like low S.I.T., high seal strengths and higher tenacity in comparison to propylene homopolymers which were used at this time.

End of the 80's beginning of the 90's advanced propylene ethylene random copolymers with higher ethylene content were developed and introduced into the market.

The lecture "CR-PP applications for film end properties" from Mr. G. Lux, Petrochemie Danubia GmbH during Maack Business Service Conference SP '88 "Polypropylene and Polyethylene Resins, Markets and Applications" reports on the impact of the ethylene content of propylene ethylene random copolymers on optical and sealing properties. In this publication it is disclosed that gloss, haze, S.I.T. (Sealing Initiation Temperature) and seal strength are improving with increasing of ethylene content. Unfortunately propylene ethylene random copolymers with higher ethylene content show a relatively high amount of extractables which leads to visible signs of aging such as a "grease" or "bloom" layer developing on the surface of the film which adversely effects the clarity of the film.

The film brochure "Daplen for film" from PCD Polymere from 1991 explains in detail the influence of increasing ethylene content on various film properties. From this source it is well known, that an increasing ethylene content leads to softer films with higher tenacity, better optical properties (especially at thicker films >=80µm) and much better S.I.T. and sealing strength.

Unfortunately a softer film is a disadvantage in conversion process due to reduced lay flat. This is a distinctive disadvantage of propylene ethylene random copolymers with higher ethylene content.

An increasing ethylene content in propylene ethylene random copolymers leads to higher amounts of hexane or xylene solubles, which leads to further problems:
a) more sticky films and slower migration of the slip agent. It is necessary to use high levels of slip agents for these polymers to achieve reasonable COF values, which allow a proper conversion,
b) restriction in food and medical packaging due to high solubles.

In EP 0 730 623 B1 a polymer composition is disclosed which comprises 0.5% to 20% of butene-1 and 80% to 99.5% of propylene and from 0% to 0.35% of the composition of a synthetic amorphous silica antiblock agent. The polymer composition and films therefrom have favourable optical (haze) and mechanical properties (tensile modulus and elongation at break) and meet certain solubles requirements.

Such propylene butene random copolymers were introduced in the late 90's in Europe for film applications to overcome some problems with propylene ethylene random copolymers as above described and shown in table 3.

It is possible to achieve approximately the same melting temperature range and thus the same sealability in terms of S.I.T. and seal strength both for propylene ethylene random copolymers as well as for propylene butene random copolymers.

The main difference is, that propylene butene random copolymers are improving the blooming behaviour (due to its much lower extractables) and stiffness in comparison to propylene ethylene random copolymers with higher ethylene content at the same melting range and sealability.

Unfortunately they are disadvantageously low in the migration speed of the slip additive, COF and in tenacity. There exists no polymer, which is capable to combine an excellent sealability, a high stiffness, high tenacity, a fast slip migration, very low COF values for high speed conversion and excellent optics at low or reduced blooming behaviour. As until now the only possibility to produce such films is the utilization of coextrusion of various polymers to achieve such a property balance.

In EP 0 674 991 A1 a propylene terpolymer is disclosed which comprises 20 to 60 wt% of a copolymer of propylene and ethylene, containing 1 to 5 wt% of ethylene, and 40 to 80 wt% of a copolymer of propylene together with ethylene and a C₄-C₈ α-olefin, the ethylene content being 1 to 5 wt% and C₄-C₈ α-olefin content being 6 to 15 wt%.

In WO 98/58971 a propylene terpolymer is disclosed which comprises 0.3 to 3 wt% of ethylene and 1 to 15 wt% of at least one C₄-C₈ α-olefin. This terpolymer can be used for the production of films having good sealing properties.

These polymers are the best ones for sealing, but are extremely soft and not tough enough. Therefore they are also limited in various applications.

It is therefore an object of the present invention to provide improved films produced from a polymer composition comprised of (i) a propylene terpolymer and (ii) a slip agent, with an improved balance of mechanical and optical properties.

This object was achieved by using a polymer composition comprised of (i) a propylene terpolymer and (ii) a slip agent where the propylene terpolymer is comprised of
0.3 - 0.8 wt% of ethylene
2.0 - 15.0 wt% of at least one C₄-C₈ α-olefin and
84.2 - 97.7 wt% of propylene
for the production of films which exhibit the following properties:
a) a dynamic Coefficient of Friction (COF) after storage for 3 days at 23 °C of smaller than 0.30 (measured according to DIN 53 375)
b) a blooming behaviour, measured in terms of haze according to ASTM D 1003-92 after storage for 14 days at 40 °C which shows a deterioration of no more than 100 % of the original value which is measured after storage for 4 days at 23 °C.

Surprisingly these films combine excellent frictional behaviour with a very little blooming.

The use of these propylene terpolymer compositions for the production of films having the above cited desirable advantages is not disclosed in the state of the art.

According to further embodiments of the present invention the lower limit for the ethylene content of the propylene terpolymers used is 0.32 wt%, preferably 0.34 wt%, more preferably 0.36 wt% and most preferably 0.38 wt%.

According to further embodiments of the present invention the upper limit for the ethylene content of the propylene terpolymers used is 0.70 wt%, preferably 0.60 wt%, more preferably 0.50 wt% and most preferably 0.45 wt%.

According to further embodiments of the present invention the lower limit for the C₄-C₈ α-olefin content of the propylene terpolymers used is 3.5 wt%, preferably 5.0 wt%, more preferably 6.5 wt% and most preferably 7.5 wt%.

According to further embodiments of the present invention the upper limit for the C₄-C₈ α-olefin content of the propylene terpolymers used is 13.5 wt%, preferably 12.0 wt%, more preferably 10.5 wt% and most preferably 9.5 wt%.

The at least one C₄-C₈ α-olefin can be any one or mixtures of 1-butene, 1-pentene, 4-methyl-1-pentene, 1-hexene, 1-heptene or 1-octene, where 1-butene is preferred.

Already after storage for 3 days at room temperature (23 °C) the films according to the present invention have a dynamic COF of less than 0.30, preferably of less than 0.25, more preferably of less than 0.20 and most preferably of less than 0.18.

This enables further processing or conversion of the films within a much shorter period of time as it was possible until now.

It is usual practice to increase the amount of slip agent in order to achieve a low COF within a short period of time. This, however, leads to processing problems due to sedimentations of slip agent on processing equipment, e.g. rolls. These processing problems are considerably reduced when producing films according to the present invention.

In order to increase the slip agent migration velocity it is usual to store film reels above room temperature in a climatized storage room (30 °C - 40 °C) immediately after their production. This, however, has a negative influence on optical properties like haze and gloss.

Since using a terpolymer with only small ethylene content does not adversely effect the' blooming behaviour of the films, they can be stored at higher temperatures without a corresponding decrease of their optical properties.

Storage cycles to accelerate slip agent migration are therefore reduced and the flexibility regarding storage capacity of the films processing industry is increased.

Further, it is particularly preferred to use the above polymer compositions for the production of films with a blooming behaviour, measured in terms of haze according to ASTM D 1003-92 after storage for 14 days at 40 °C which shows a deterioration of no more than 80 %, preferably of no more than 60 % of the original value which is measured after storage for 4 days at 23 °C.

The haze of 80 µm thick cast film is e.g. deteriorating from an original value of 1.4 % to 2.1 % - which is a deterioration of 50%.

The polymer compositions which are used according to the present invention have a melting point of about 140 °C, which corresponds to a S.I.T. (Seal Initiation Temperature) of <= 110 °C for a 30 µm film.

According to a further embodiment the films exhibit the following properties:
c) a tensile modulus according to DIN 53 457 of at least 350 MPa for a 50 µm film and
d) a penetration energy according to DIN 53 373 of at least 28 J/mm for a 50 µm film.

It is particularly preferred to use the above polymer compositions for the production of films with a tensile modulus of at least 360 MPa, more preferably of at least 370 MPa and most preferably of at least 385 MPa.

It is further preferred to use the above described polymer composition for the production of films showing a penetration energy of at least 30 J/mm, preferably of at least 33 J/mm, more preferably of at least 36 J/mm and most preferably of at least 39 J/mm.

By using a terpolymer with only small amounts of ethylene the frictional behaviour of the resulting films is improved due to an increased slip agent migration velocity. It is therefore possible to use smaller amounts of slip agent, which in turn leads to a general improvement in optical properties of the starting material.

It is therefore preferred that the polymer composition comprises only from 0.01 to 0.30 wt% of an organic slip agent. According to further embodiments of the present invention the lower limit for the slip agent content of the polymer composition used is 0.05 wt%, preferably 0.08 wt%, more preferably 0.10 wt% and most preferably 0.12 wt%. According to still further embodiments of the present invention the upper limit for the slip agent content of the polymer composition used is 0.25 wt%, preferably 0.22 wt%, more preferably 0.20 wt% and most preferably 0.18 wt%.

The organic slip agent comprises any one or mixtures of erucic acid amide (EAA) and/or oleic acid amide (OAA).

According to a preferred feature of the present invention the organic slip agent comprises erucic acid amide. Erucic acid amide is known to contribute rather little to a "bloom" layer, but shows a smaller migration velocity than for example oleic acid amide. A slip agent can be used which consists solely or to at least 50% of erucic acid amide, the rest being e.g. oleic acid amide.

According to the present invention the COF after 3 days is much smaller than with known polymer compositions and films therefrom.

According to a still further embodiment of the present invention the films which are produced using the above described polymer composition have a COF after storage for 14 days of smaller than 0.18, preferably smaller than 0.15, more preferably smaller than 0.14 and most preferably smaller than 0.13.

It has already been mentioned, that using a terpolymer with only small ethylene content does not adversely effect the blooming behaviour of the films.

It is thus particularly preferred to use the above described polymer composition for the production of films with a blooming behaviour measured as haze after storage for 14 days at 40 °C of up to 2.5 %, preferably of up to 2.3 % and more preferably of up to 2.1 %.

In addition to the above described blooming characteristics (referred to as haze), it is preferred to use the above described polymer compositions for the production of films with a blooming behaviour measured as gloss after storage for 14 days at 40 °C of at least 115 %, preferably of at least 120 %, more preferably of at least 125 % and most preferably of at least 130 %.

According to the invention it is advantageous to use a polymer composition comprised of a propylene terpolymer which has a proportion of polymer soluble in cold xylene at 23 °C of no more than 5 %, preferably of no more than 4.5 %, more preferably of no more than 4.0 %.

The films produced from polymer compositions containing these terpolymers meet the solubles requirements which are necessary for applications in food packaging.

The films according to the present invention have a preferred thickness of from 10 to 2000 µm.

According to a still further embodiment of the present invention the preferred production technology for the films is the cast film technology.

The films which are obtainable according to the present invention are advantageously used for the production of sterilizable lamination films, packaging films for FFS plants and for thin cast films, e.g as a substitute for BOPP films.

### Description of Production of Propylene Terpolymer

The polymerization process for the production of the propylene terpolymers according to the invention may be a continuous process or a batch process utilizing known methods and operating in liquid phase, optionally in the presence of an inert diluent, or in gas phase or by mixed liquid-gas techniques. The process is preferably carried out in the presence of a stereospecific catalyst system.

As catalyst any ordinary stereospecific Ziegler-Natta catalysts can be used. An essential component in those catalysts are solid catalyst components comprising a titanium compound having at least one titanium-halogen bond, an internal electron donor compound and a magnesium halide in active form as a carrier for both the titanium component and the donor compound. The catalysts can contain - as internal electron donor - compounds selected from ethers, ketones, lactones, compounds containing N, P and/or S atoms and esters of mono and dicarboxylic acids.

A further essential component of the catalyst is an organoaluminium compound, such as an alkylaluminium compound. Additionally, an external electron donor is generally used.

To obtain the propylene terpolymer, it is preferred to use a polymerization process based on at least one reactor and an optional second polymerization step comprising at least one gas phase reactor.

Before the catalyst system is used in the actual poylmerization process it is optionally prepolymerized with small amounts of α-olefins in order to enhance catalyst performance and to improve the morphology of the end product.

In the first step of the process the optionally prepolymerized catalyst system and a monomer mixture comprised of propylene, ethylene and at least one C₄-C₈ α-olefin is fed into a reactor. The at least one C₄-C₈ α-olefin can be any one or mixtures of 1-butene, 1-pentene, 4-methyl-1-pentene, 1-hexene, 1-heptene or 1-octene. Particularly preferred is 1-butene. The amount of propylene can be 59 to 89 wt%, the amount of ethylene can be 0.2 to 1.0 wt% and the amount of C₄-C₈ α-olefin can be 10 to 40 wt%.

Polymerization can be carried out in the presence of the previously mentioned organoaluminium compound and an external donor compound at temperatures lower than 90 °C and pressures in the range of 10 to 90 bar, preferably 30 to 70 bar. The polymerization is carried out in such conditions that 50 to 100 wt%, preferably 75 to 99 wt% of the end product is polymerized in the first reactor.

Any metallocene catalyst capable of catalyzing the formation of a propylene terpolymer can be used. A suitable metallocene catalyst comprises a metallocene/activator reaction product impregnated in a porous support at maximum internal pore volume. The catalyst complex comprises a ligand which is typically bridged, and a transition metal of group IVa ... VIa, and an organoaluminium compound. The catalytic metal compound is typically a metal halide.

In the first polymerization step a terpolymer is produced, in which the content of ethylene monomer is in the range of 0.2 to 1.0 wt%, preferably 0.3 to 0.7 wt% and the content of C₄-C₈ α-olefin is in the range of 3 to 15 wt%, preferably of 5 to 12 wt%. Hydrogen is added, when desired, into the first reactor for adjusting the molecular weight of polymer, as conventional.

After the polymerization is complete in the first reactor, the reaction medium is optionally transferred into a second reactor, which can be a gas phase reactor.

In the optional second reactor, 0 to 50 wt%, preferably 1 to 25 wt% of the final terpolymer is formed. In the second reactor the polymerization can be carried out at a temperature of 60 to 90 °C and at a pressure higher than 5 bar, preferably higher than 10 bar. Optionally, propylene and other monomers can be added into the second reactor. Hydrogen can also be added into the gas phase reactor, if desired.

The precise control of the polymerization conditions and reaction parameters is within the skill of the art. After the polymerization in the first and the optional second reactor is finished, the polymer product is recovered by conventional procedures.

The resulting polymer particles may be pelletized in a conventional compounding extruder with various additives, which are generally used in thermoplastic polymer compositions, such as stabilizers, antioxidants, acid neutralizing agents, ultraviolet absorbers, clarifying agents, antiblocking agents, antistatic agents, antifogging agents, etc.

Further the polymer material contains at least one slip agent which may be derived from fatty acid amides, like erucic acid amide (EAA), oleic acid amide (OAA) or behenic acid amide (BAA), which may be added directly in the compounding step or during the processing of films in the way of an external masterbatch.

### Applications

The propylene terpolymer can be used for all extrusion and injection technologies.

Preferably they are used for technologies for extruded bi- and monoaxially - and non oriented films like cast, blown and rollstack films and coating in a film thickness range between 10 to 2000 µm.

More preferably they are used for the manufacturing of flexible non oriented and bi- and monoaxially oriented films between 10 and 300 µm with the cast film, blown film and coating technology.

Most preferably they are used for the manufacturing of non oriented cast films in a thickness range between 10 to 200 µm.

### Description of film production by cast film technology:

The polymer compositions were processed to 30 µm, 50 µm and 80 µm thick cast films by conventional chill roll technology. For the plastification and homogenisation of the polymer a Barmag extruder with a cylinder diameter of 60 mm and a screw with a length of 30 x diameter (incl. mix- and shear part) was used. The feeding zone was notched and water cooled. Molten material was cooled with a water cooled chill roll with a diameter of 450 mm and a mat surface followed by a second cooling roll with a diameter of 300 mm and a mat surface. Set temperatures of chill roll and second cooling roll were 15 °C and 25 °C.

After the cast film was cooled it was cut and wound up.

### Processing parameters:

| | Unit | **1** | **2** | **3** | **4** | **5** | **6** | **7** | **8** | **9** |
|---|---|---|---|---|---|---|---|---|---|---|
| | | | | | | | | | | |
| take-off speed 30µm | [m/min] | 53.2 | 53.0 | 52.9 | 53.7 | 52.3 | 52.4 | 52.3 | 55.6 | 53.1 |
| take-off speed 50µm | [m/min] | 30.8 | 31.1 | 31.8 | 31.0 | 31.8 | 30.5 | 31.3 | 32.3 | 31.1 |
| take-off speed 80µm | [m/min] | 19.1 | 19.3 | 19.3 | 19.2 | 19.0 | 19.0 | 19.1 | 19.4 | 19.5 |
| output | [kg/h] | 60 | 60 | 60 | 60 | 60 | 60 | 60 | 60 | 60 |
| screw speed | [1/min] | 36 | 35 | 35 | 36 | 36 | 37 | 36 | 58 | 38 |
| melt temperature | [°C] | 238 | 237 | 237 | 237 | 237 | 236 | 238 | 239 | 236 |
| melt pressure | [bar] | 77 | 75 | 74 | 77 | 77 | 76 | 75 | 72 | 69 |

The films produced from polymer compositions containing these terpolymers are applicable for a variety of uses.

### Example for Bread bags

### Film processing

A 48 µm thick castfilm for bread packaging was produced at a Reifenhäuser 90 castfilm mono extrusion line at a melt temperature of 235 °C, an output of 350 kg/h and a line speed of 82 m/min. The film reel was cut later to a width of 437 mm.

### Conversion

The cut film was fed into a Lehmacher - sealing and cutting machinery for the production of bread bags with a heated wire at a temperature of 350°C.

It was possible to run the following cycles with the above described films:

| | |
|---|---|
| Nr.3: (invention) | 162 cycles/min |
| Nr.5: C₃/C₄ Raco | 149 cycles/min |
| Nr.9: C₃/C₂ Raco | 152 cycles/min |

### Substitute for BOPP-films (biaxially oriented polypropylene films)

BOPP-films are very stiff and highly transparent films with good sealing properties. Films according to the invention are applicable as a substitute for some BOPP-films. While propylene ethylene random copolymers and propylene ethylene butene terpolymers with higher ethylene content show insufficient stiffness, the films according to the invention show an acceptable compromise between stiffness/sealing properties.

A film applicable as BOPP-substitute is e.g. constituted as a coextruded three layer film with an overall thickness of 15 to 30 µm, where both exterior layers are comprised of materials according to the invention and where the interior layer is comprised of a high crystalline propylene homopolymer.

### Packaging films for FFS-plants

A combination of high stiffness, low COF and good sealing properties is required for this application. Films according to the invention exhibit all of these properties and thus permit a reduction of cycle times on FFS-plants of up to 30 %.

### Lamination films

A combination of very good optical properties, high stiffness, good sealing properties and good lay flat is required for this application. Films according to the invention exhibit all of these properties and in addition they are sterilizable at 121 °C for 30 min.

Referring to the sterilization process, the films according to the invention have higher starting toughness, less embrittlement and a smaller loss of optical properties compared to films from propylene butene or propylene ethylene random copolymers.

### TEST METHODS

### Polymer properties

The **melt flow rates** were measured with a load of 2.16 kg and at 230 °C. The melt flow rate (MFR) is that quantity of polymer in grams which the test apparatus standardized to DIN 53 735 extrudes within 10 minutes at a temperature of 230 °C under a weight of 2.16 kg.

**Comonomer contents** (ethylene and butene) were measured with Fourier transform infrared spectroscopy (FTIR) calibrated with ¹³C-NMR.

**Xylene solubles** were determined at 25 °C according to ISO 6427.

The **slip agent** (EAA and/or OAA) is removed from the polymer by extracting 5-10 g of ground polymer sample in a Soxhlet apparatus with 110 ml chloroform for approximately 2.5 hours. After filtration of the extract, the amount of EAA and/or OAA is determined by GC using the internal standard method.

### Film properties

The **dynamic Coefficient of Friction (COF)** as a measure of the frictional behaviour of the film was determined according to DIN 53 375 on film samples with a thickness of 30 µm, where immediately after film production the film has been stored at room temperature (23°C). After storage for 1, 3, 7 and 14 days the dynamic COF was measured at 23°C.

**Gloss, haze, penetration energy** and **tensile modulus were** determined on samples which were immediately after film production stored for 4 days at a temperature of 23 °C.

**Gloss** and **haze** as measures for the optical appearance of the film were determined according to DIN 67 530 (gloss) and ASTM D 1003-92 (haze), both on film samples with a thickness of 80 µm.

The **penetration energy** as a measure for toughness of the films was determined with Dynatest acording to DIN 53 373 on film samples with a thickness of 50 µm.

The **tensile modulus** as a measure for the stiffness of the films was determined according to DIN 53 457 on film samples with a thickness of 50 µm.

The **blooming behaviour** as further measure of optical properties of the film was determined according to the following procedure:
Immediately after production of the film specimens (80 µm) were stored for 4 days at 23 °C. After 4 days they were transferred into an oven and were stored at a constant temperature of 40 °C. Samples were withdrawn from the oven after 14 days. Immediately after withdrawal of the samples gloss and haze were determined according to the above mentioned standard procedures.

### EXAMPLES

### Example 1 (Invention):

The propylene ethylene 1-butene terpolymer was polymerized in a continuous working polymerization system by using propylene, ethylene, 1-butene, the catalyst compound C and cocatalysts (Triethylaluminium (TEAI), Electron donor (CMDMS)).

### Catalyst compound C

As catalyst compound C a commercial available Ziegler/Natta-catalyst (Titaniumchloride catalyst supported on MgCl₂), suitable for the production of propylene copolymers in a monomer suspension is used.

### Polymerization

The polymerization is performed continuously in a prepolymerization reactor and a main polymerization reactor. Temperatures, pressures, catalyst-, monomer- and hydrogen feed in the separate polymerization steps as well as the polymer concentration in the main reactor are kept constant. The molar mass of the terpolymer is controlled by adding hydrogen gas. The concentration of hydrogen in the mixture of liquid monomers is continuously measured by gas chromatography. The relevant processing parameters and the analytical results of the resulting polymer are listed in tables 1 and 2.

The first polymerization step is performed in a small reactor (equipped with stirrer and cooling system), where an excess of a liquid mixture of the monomers propylene and 1-butene is prepolymerized for 9 minutes at 20°C. Therefore catalyst compound C, mixed with the cocatalyst compounds triethylaluminium (TEAI) and cyclohexyl-methyl-dimethoxysilane (CMDMS) as external electron donor, are continuously poured into the prepolymerization unit.

The prepolymer (product A) is continuously removed from the prepolymerization unit and passed over into the main reactor system (equipped with stirrer and cooling system), where under excess of a liquid mixture of the monomers propylene and 1-butene, under addition of ethylene, the final terpolymer (B) is formed. Further a mixture of monomers (propylene/1-butene/ethylene) and hydrogen (for molar mass control) are fed into the main reactor continuously. The polymer concentration is kept constant at 169 g/l. A part of the reactor content (polymer-/monomer excess) is continuously removed from the reactor into a degassing unit to separate the formed terpolymer (B) from unreacted monomer mixture by evaporation.

The separated terpolymer (B) was subjected to a steam treatment, to remove the unreacted monomers and volatile substances, and then dried. The polymer powder was mixed with 300 pm calciumstearate, 500 pm tetrakis[methylene(3,5-di-tert-butyl-4-hydroxy-hydrocinnamate)]methane, 1000 ppm tris(2,4-di-tert-butylphenyl)phosphite and 1500 ppm SiO₂ and pelletized in a conventional compounding line.

### Example 2 (Invention):

The propylene ethylene 1-butene terpolymer was polymerized following the procedure described for example 1 under the conditions as mentioned in tables 1 and 2 for example 2. The polymer powder was mixed with 300 ppm calciumstearate, 500 ppm tetrakis[methylene(3,5-di-tert-butyl-4-hydroxy-hydrocinnamate)]methane, 1000 ppm tris(2,4-di-tert-butylphenyl)phosphite and 1500 ppm SiO₂ and pelletized in a conventional compounding line.

### Example 3 (Invention):

The propylene ethylene 1-butene terpolymer powder of example 2 was mixed with 300 ppm calciumstearate, 500 ppm tetrakis[methylene(3,5-di-tert-butyl-4-hydroxy-hydrocinnamate)]-methane, 1000 ppm tris(2,4-di-tert-butylphenyl)phosphite, 1500 ppm SiO₂ and 1500 ppm erucic acid amide and pelletized in a conventional compounding line.

### Comparative example 4:

The propylene ethylene 1-butene terpolymer was polymerized following the procedure described for example 1 under the conditions as mentioned in tables 1 and 2 for example 4. The polymer powder was mixed with 300 ppm calciumstearate, 500 ppm tetrakis[methylene(3,5-di-tert-butyl-4-hydroxy-hydrocinnamate)]methane, 1000 ppm tris(2,4-di-tert-butylphenyl)phosphite, 1500 ppm SiO₂ and 1500 ppm erucic acid amide and pelletized in a conventional compounding line.

### Comparative example 5:

The propylene 1-butene copolymer was polymerized following the procedure described for example 1 under the conditions as mentioned in tables 1 and 2 for example 5 without the addition of ethylene. The polymer powder was mixed with 300 ppm calciumstearate, 500 ppm tetrakis[methylene(3,5-di-tert-butyl-4-hydroxy-hydrocinnamate)]methane, 1000 ppm tris(2,4-di-tert-butylphenyl)phosphite, 1500 ppm SiO₂ and 1500 ppm erucic acid amide and pelletized in a conventional compounding line.

### Comparative example 6:

The propylene ethylene 1-butene terpolymer powder of example 5 was mixed with 300 ppm calciumstearate, 500 ppm tetrakis[methylene(3,5-di-tert-butyl-4-hydroxy-hydrocinnamate)]-methane, 1000 ppm tris(2,4-di-tert-butylphenyl)phosphite, 1500 ppm SiO₂ and 2000 ppm erucic acid amide and pelletized in a conventional compounding line.

### Comparative example 7:

The propylene 1-butene copolymer was polymerized following the procedure described for example 1 under the conditions as mentioned in tables 1 and 2 for example 7 without the addition of ethylene. The polymer powder was mixed with 300 ppm calciumstearate, 500 ppm tetrakis[methylene(3,5-di-tert-butyl-4-hydroxy-hydrocinnamate)]methane, 1000 ppm tris(2,4-di-tert-butylphenyl)phosphite and 1500 ppm SiO₂ pelletized in a conventional compounding line.

### Comparative example 8:

As comparative example 8 a commercially available terpolymer grade **(Borseal® TD115BF)** was used.

### Comparative example 9:

As comparative example 9 a commercially available polymer grade **(Borealis RD226CF)** was used.

**Table 1**

| | | **Examples** | | | | |
|---|---|---|---|---|---|---|
| **Parameter** | **unit** | **1** | **2** | **4** | **5** | **7** |
| TEAL/CMDMS | [g/g] | 4,85 | 4,85 | 4,85 | 4,85 | 4,85 |
| TEAI/DCPDMS | [g/g] | - | - | - | - | - |
| TEAI/Ti | [g/g] | 643 | 846 | 637 | 704 | 666 |
| TEAI/Ti | [mol/mol] | 270 | 355 | 267 | 295 | 280 |

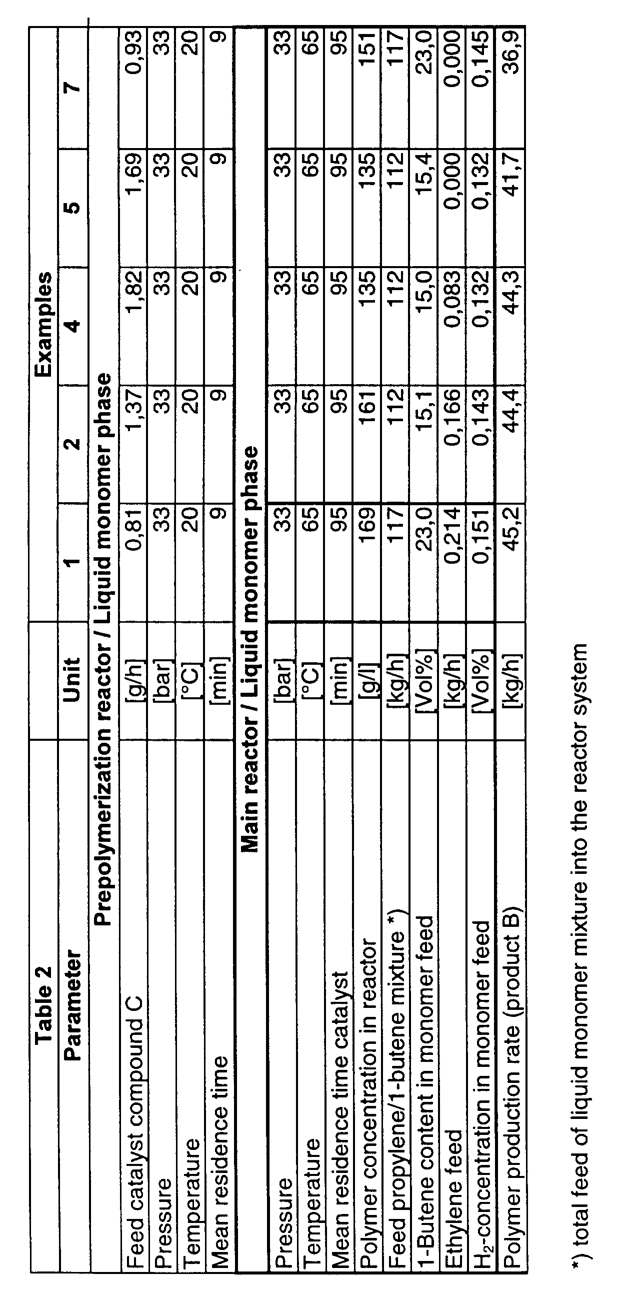

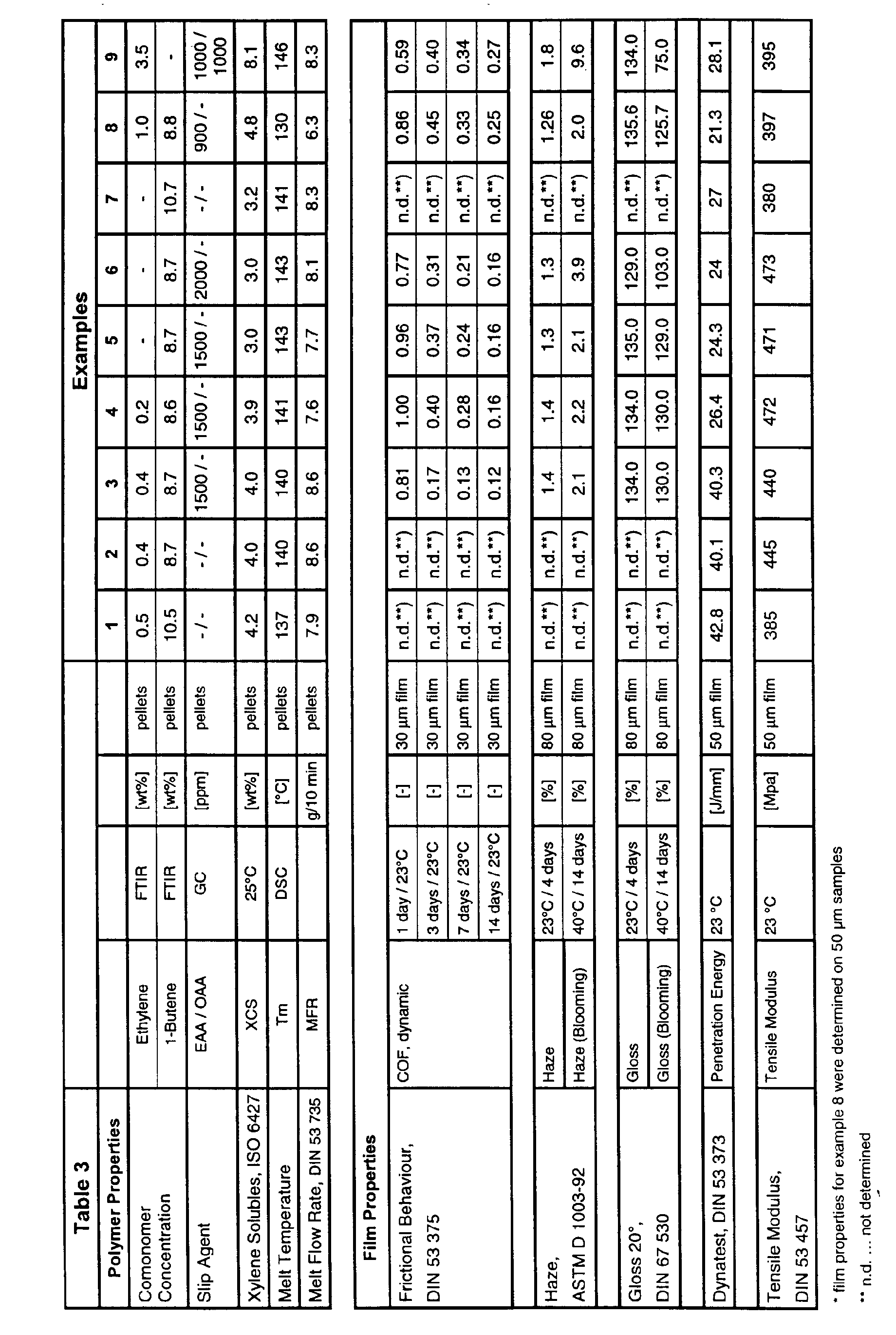

The COF after storage for 3 days for all of the comparative examples is above 0.30 and only 0.17 for example 3.

The best achievable COF of examples 4, 5, 6, 8 and 9 after 14 days is 0.16, which is (almost) achieved for example 3 after only 3 days.

A rapid onset of a low COF value is important for the film processing industry, because it allows shorter storage times of the films. This is usually tried to achieve with higher concentrations of slip agent, as can be seen from examples 5 and 6. Higher concentrations of slip agent, however, result in a deterioration of the blooming behaviour.

The values of the optical properties haze and gloss (both 23 °C/4 days) of example 3 are comparable or slightly better than that of examples 4, 5, 8 and 9. Example 6 shows lower gloss values due to higher slip agent content.

The values representing the blooming behaviour (haze and gloss both 40 °C/14 days) are comparable to examples 4 and 5, somewhat better than example 6 and 8 and much better than example 9. An increase of slip agent does adversely effect optical properties and blooming behaviour as can be seen from examples 5 and 6.

Example 9 shows about 6 to 14 % higher tenacity but 20 % lower stiffness compared to examples 4 and 5. Example 8 is comparable to example 9 with respect to stiffness but shows a much lower penetration energy.

Example 7 is more or less comparable to example 9. Example 1 and 7 show the same stiffness but example 1 has a remarkably higher tenacity.

Example 2 and 3 show the best ratio of stiffness and tenacity. Compared to example 9 they show an increase of stiffness of about 11 % and an increase of penetration energy of about 30%.

Starting from example 5 it can be concluded that an addition of 0.2 wt% ethylene (example 4) does not improve mechanical properties. With further increased ethylene contents (0.4 and 0.5 wt% as in examples 1 to 3) distinctly better mechanical properties are achieved. An addition of 1.0 wt% ethylene (example 9) already results in a decrease in stiffness and tenacity.

## Claims

1. Use of a polymer composition comprised of (i) a propylene terpolymer and (ii) a slip agent where the propylene terpolymer is comprised of
0.3 - 0.8 wt% of ethylene
2.0- 15.0 wt% of at least one C₄-C₈ α-olefin and
84.2 - 97.7 wt% of propylene
for the production of films which exhibit the following properties:
a) a dynamic Coefficient of Friction (COF) after storage for 3 days at 23 °C of smaller than 0.30 (measured according to DIN 53 375)
b) a blooming behaviour, measured in terms of haze according to ASTM D 1003-92 after storage for 14 days at 40 °C which shows a deterioration of no more than 100 % of the original value which is measured after storage for 4 days at 23 °C.

2. Use according to claim 1, **characterized in that** the films exhibit the following properties:
a) a tensile modulus according to DIN 53 457 of at least 350 MPa for a 50 µm film and
b) a penetration energy according to DIN 53 373 of at least 28 J/mm for a 50 µm film.

3. Use according to any one of claims 1 or 2, **characterized in that** the polymer composition comprises an organic slip agent in the range of 0.01 to 0.30 wt%.

4. Use according to any one of claims 1 to 3, **characterized in that** the organic slip agent comprises any one or mixtures of erucic acid amide (EAA) and/or oleic acid amide (OAA).

5. Use according to any one of claims 1 to 4, **characterized in that** the COF after storage for 14 days is smaller than 0.18.

6. Use according to any one of claims 1 to 5, **characterized in that** said terpolymer has a proportion of polymer soluble in cold xylene (25 °C) of no more than 5 %.

7. Use according to any one of claims 1 to 6, **characterized in that** the films have a thickness of from 10 to 2000 µm.

8. Use according to any one of claims 1 to 7, **characterized in that** the films are produced by the cast film technology.

9. Use according to any one of claims 1 to 7 for the production of sterilizable lamination films, packaging films for FFS plants and for thin cast films.
